# FASCICULE DE BREVET EUROPEEN

(11) **EP 0 884 003 B1**
(45) Date de publication et mention de la délivrance du brevet: **19.01.2005**
(21) Numéro de dépôt: 97201751.1
(22) Date de dépôt: 10.06.1997
(51) Int. Cl.: A23L 1/29, A23L 1/0522, A23C 9/137

(54) **Crème lactique**
Milchcreme
Milk-based cream

(43) Date de publication de la demande: 16.12.1998
(73) Titulaire: SOCIETE DES PRODUITS NESTLE S.A., 1800 Vevey (CH)
(72) Inventeur: Merz, Madeleine, 3510 Konolfingen (CH); Daenzer, Martine, 1436 Treycovagnes (CH); Meister, Niklaus, 3506 Grosshoechstetten (CH)
(74) Mandataire: Thomas, Alain

(56) Documents cités:
- EP-A- 0 714 609
- WO-A-85/02979
- DE-A- 3 319 072
- US-A- 4 770 892
- KESSLER H.G.: 'Lebensmittel- und Bioverfahrenstechnik-Molkereitechnologie', 1988, VERLAG A. KESSLER, FREISING, GERMANY

## Description

L'invention concerne une crème lactique UHT , stérilisée ou réfrigérée ayant une teneur en matière grasse comprise entre 10 et 30 %.

Il existe déjà un brevet mentionnant une émulsion susceptible d'être battue avec une teneur relativement réduite en matière grasse. Ce brevet US 4'770'892 mentionne une crème, mais elle contient en outre un alginate, des dérivés de la cellulose et des émulsifiants et du fait de la présence de ces additifs, elle est fluide.

Le but de la présente invention est de disposer d'une crème lactique, donc obtenue avec des composants du lait, et ayant une bonne viscosité, malgré une teneur réduite en matières grasses. D'autre part, il faut que au cours du stockage, il n'y ait pas de séparation des phases.

L'invention concerne une crème lactique UHT , stérilisée ou réfrigérée ayant une teneur en matière grasse comprise entre 10 et 30 % et contenant un additif choisi parmi un mélange amidon modifié/maltodextrines à une teneur en amidon modifié comprise entre 1,5 et 4 % et à une teneur en maltodextrines entre 1 et 4 % et un mélange xanthane/maltodextrines à une teneur en maltodextrines comprise entre 1,5 et 4 % et à une teneur en xanthane comprise entre 0,1 et 0,4 %, ladite crème ayant une viscosité comprise entre 250 et 1600 mPas.

Par crème lactique, on entend aussi une crème préparée à partir d'une base de lait et/ou d'une base de lait écrémé avec une addition de matière grasse lactique, de matière grasse non lactique ou d'un mélange de matière grasse lactique et de matière grasse non lactique.

La crème selon l'invention n'est pas destinée à être battue, mais on peut toujours envisager cette possibilité.

La mesure de la viscosité est faite avec un viscosimètre rotatif Haake RS 100 du type cône/plan et travaillant à une vitesse de cisaillement de 100 s-1 et à 20 °C

La matière grasse lactique utilisée est de la crème avec une teneur en graisse normalement comprise entre 30 et 40 %. La matière grasse non lactique est une graisse ou une huile végétale. Cette matière grasse n'est pas critique : il peut s'agit aussi bien d'une graisse de coprah que de l'huile de tournesol.

S'agissant de la composition finale en graisse de la crème lactique, elle est de préférence comprise entre 15 et 25 %.

Pour obtenir la viscosité souhaitée on ajoute à la crème de l'amidon modifié. Il est ajouté de préférence à raison de 3 à 4 %. Si la teneur en graisse de la crème lactique est plus faible, il faut ajouter plus d'amidon et inversement. Dans un second mode de réalisation, on ajoute à la crème un mélange d'amidon et de maltodextrines. Les maltodextrines utilisées ne sont pas critiques. Dans un troisième mode de réalisation, la crème lactique selon l'invention contient un mélange de xanthane et de maltodextrines. Dans ce cas, le rapport xanthane sur maltodextrines est compris entre 1:4 et 1:8.

On peut envisager pour la crème lactique selon l'invention plusieurs types de recettes. Cette crème est soit salée aromatisée, soit sucrée aromatisée, soit salée, soit sucrée. On peut également envisager une utilisation de cette crème comme garniture de snack, sous forme foisonnée ou non.

Dans les cas d'une crème salée aromatisée, on peut envisager une aromatisation avec notamment des champignons, du fromage, des fines herbes, de l'ail. Dans le cas d'une crème sucrée aromatisée, on fait une aromatisation notamment avec de la vanille, de la banane, des fraises, du chocolat, du caramel et de la noix de coco.

La crème salée aromatisée trouve une utilisation dans des mets cuits, frais, réfrigérés ou surgelés. La crème sucrée aromatisée est utilisable comme garniture sur des fruits ou des crèmes glacées ou comme crème dessert. La crème neutre salée et sucrée est utilisable dans diverses applications dans les restaurants et en service traiteur.

Pour la préparation de la crème selon l'invention, on travaille soit par un traitement UHT et on fait un remplissage aseptique, soit on effectue le mélange, on remplit en boîte et on stérilise, soit on effectue le mélange, on stérilise et on remplit, soit on effectue le mélange, on pasteurise et on remplit.

Dans le cas de la fabrication par UHT, on opère de la manière suivante : on mélange avec l'eau le lait en poudre, avec éventuellement du lait maigre, on y ajoute les additifs pour le lait en poudre,et on y dissout le sucre, les colorants et les arômes. On mélange finalement la crème (ayant une teneur en graisse de l'ordre de 36 %) et on fait un traitement UHT à 148 °C pendant 10 sec. et on homogénéise éventuellement à une pression inférieure à 250 bar pour aller vers le dispositif de remplissage aseptique.

Dans le cas de la fabrication plus classique par stérilisation, on fait dans le même ordre que ci-dessus les mélanges, on remplit dans des boîtes en fer et on passe pendant 30 min dans un stérilisateur.

La crème obtenue selon l'invention se conserve à température ambiante pendant 6 à 12 mois. Pendant cette durée de stockage, il n'y a aucune séparation de graisse et pas de formation de sérum. Dans le cas d'une crème pasteurisée ou d'une crème remplie non aseptiquement après stérilisation, elles se conservent pendant 6 semaines au réfrigérateur.

La suite de la description est faite en référence aux exemples.

### Exemple 1 : Crème sucrée aromatisée (exemple comparatif)

On mélange 51,10 kg d'eau avec 11,25 kg de poudre de lait et 22 kg de lait maigre.On y ajoute ensuite de la vitamine B2, 0,27 kg de vanille, 12, 6 kg de sucre et 7,7 kg d'amidon modifié (stabilisé et réticulé). On mélange finalement avec 75 kg de crème ayant une teneur en matière grasse de 36 %. On effectue alors le traitement UHT tel que mentionné ci-dessus.

On arrive à un produit ayant la composition suivante : 15% de graisse de lait, 9 % de matière sèche non grasse du lait (SNF) (lactose, protéines ), 7 % de sucre, 3,8 % d'amidon, 0,15 % de vanille, le reste étant de l'eau.

On peut alors varier la recette avec d'autres arômes, comme l'arôme de fraise ou le caramel. On obtient un produit ayant une viscosité de 983 mPas au moment de la préparation.

### Exemple 2 : Crème salée aromatisée

On effectue le mélange comme ci-dessus avec l'eau, la poudre de lait et le lait maigre et en outre 1,3 kg de sel, 4,7 kg de maltodextrine, o,63 kg de xanthane et la quantité d'arôme pour arriver à la composition suivante de crème selon l'invention : 25 % de graisse de lait, 7 % de SNF, 0,8 % de sel, 2,5 % de maltodextrines, 0,35 % de xanthane, entre 0,1 et 1 % d'arômes (selon le type d'arôme utilisé), le reste étant de l'eau.

On obtient un produit final ayant une viscosité comprise entre 250 et 300 mPas.

### Exemple 3 : Crème salée aromatisée

On effectue le mélange comme pour l'exemple 1 avec l'eau, la poudre de lait, le lait maigre, 1,5 kg de sel, 5 kg de maltodextrine, 8 kg d,amidon et la quantité d'arôme pour arriver à un produit final ayant la composition suivante : 20 % de graisse de lait, 8,5 % de SNF, 0,8 % de sel, 5,8 % de mélange maltodextrines/amidon, entre 0,1 et 1 % d'arômes, le reste étant de l'eau.

Dans le cas de tous ces exemples, on arrive à une crème conservable 12 mois à température ambiante et ayant une viscosité de l'ordre de 1000 mPas.

### Exemple 4 : Crème neutre

On mélange 32,47 kg d'eau avec 0,22 kg de poudre de lait. On y ajoute ensuite 3,4 kg d'amidon et finalement 63,9 kg de crème ayant une teneur en matière grasse de 36 %. On arrive à un produit ayant la composition suivante : 23 de graisse de lait, 3,9 % de SNF et 3 % d'amidon.

Dans une autre version, on utilise un mélange de 25,3 kg d'eau, 2,81 kg de poudre de lait. On y ajoute ensuite o,33 kg de xanthane et 2,1 kg de maltodextrine et finalement 69,45 kg de crème ayant une teneur en matière grasse de 36 %. On arrive à un produit ayant la composition suivante : 25 % de graisse de lait, 6,7 % de SNF, 0,3 % de xanthane et 2 % de maltodextrine.

Dans les deux cas, on obtient une crème ayant une viscosité de l'ordre de 300 mPas.

## Revendications

1. Crème lactique UHT , stérilisée ou réfrigérée ayant une teneur en matière grasse comprise entre 10 et 30 % et contenant un additif choisi parmi un mélange amidon modifié/maltodextrines à une teneur en amidon modifié comprise entre 1,5 et 4 % et à une teneur en maltodextrines comprise entre 1 et 4 % et un mélange xanthane/maltodextrines à une teneur en maltodextrines comprise entre 1,5 et 4 % et à une teneur en xanthane comprise entre 0,1 et 0,4 % , ladite crème ayant une viscosité comprise entre 250 et 1600 mPas.

2. Crème lactique selon la revendication 1, **caractérisée en ce que** la matière grasse est une matière grasse lactique, une matière grasse végétale ou un mélange des deux.

3. Crème lactique selon l'une des revendications 1 ou 2, **caractérisée en ce que** la teneur en matière grasse est comprise entre 15 et 25 %.

4. Crème lactique selon l'une des revendications 1 à 3, **caractérisée en ce que** ladite crème est salée aromatisée, sucrée aromatisée, salée, sucrée ou neutre.

5. Crème lactique selon l'une quelconque des revendications 1 à 4, **caractérisée en ce qu'**elle contient entre 3 et 4 % d'amidon modifié.

## Patentansprüche

1. Sterilisierte oder gekühlte UHT-Milchsahne mit einem Fettgehalt zwischen 10 und 30 %, die einen Zusatz enthält, der ausgewählt ist aus einer Mischung modifizierte Stärke/Maltodextrine mit einem Gehalt an modifizierter Stärke zwischen 1,5 und 4 % und einem Gehalt an Maltodextrinen zwischen 1 und 4 % und einer Mischung Xanthan/Maltodextrine mit einem Gehalt an Maltodextrinen zwischen 1,5 und 4 % und einem Gehalt an Xanthan zwischen 0,1 und 0,4 %, wobei diese Sahne eine Viskosität zwischen 250 und 1600 mPas besitzt.

2. Milchsahne nach Anspruch 1, **dadurch gekennzeichnet, daß** das Fett ein Milchfett, ein Pflanzenfett oder eine Mischung aus beiden ist.

3. Milchsahne nach einem der Ansprüche 1 oder 2, **dadurch gekennzeichnet, daß** der Fettgehalt zwischen 15 und 25 % liegt.

4. Milchsahne nach einem der Ansprüche 1 bis 3, **dadurch gekennzeichnet, daß** die Sahne aromatisiert gesalzen, aromatisiert gezuckert, gesalzen, gezuckert oder neutral ist.

5. Milchsahne nach einem der Ansprüche 1 bis 4, **dadurch gekennzeichnet, daß** sie zwischen 3 und 4 % modifizierte Stärke enthält.

## Claims

1. UHT, sterilized or refrigerated milk-based cream having a fat content of between 10 and 30% and containing an additive selected from a mixture of modified starch/maltodextrins with a modified starch content of between 1.5 and 4% and a maltodextrin content of between 1 and 4%, and a mixture of xanthan/maltodextrins with a maltodextrin content of between 1.5 and 4% and a xanthan content of between 0.1 and 0.4%, said cream having a viscosity of between 250 and 1600 mPas.

2. Milk-based cream according to Claim 1, **characterized in that** the fat is a milk-based fat, a vegetable fat or a mixture of the two.

3. Milk-based cream according to Claim 1 or 2, **characterized in that** the fat content is between 15 and 25%.

4. Milk-based cream according to one of Claims 1 to 3, **characterized in that** it is flavoured and savoury, flavoured and sweet, savoury, sweet or neutral.

5. Milk-based cream according to any one of Claims 1 to 4, **characterized in that** it contains between 3 and 4% of modified starch.
